# EUROPÄISCHE PATENTSCHRIFT

(11) **EP 2 725 313 B1**
(45) Veröffentlichungstag und Bekanntmachung des Hinweises auf die Patenterteilung: **08.07.2020**
(21) Anmeldenummer: 13189198.8
(22) Anmeldetag: 18.10.2013
(51) Int. Cl.: A23L 3/36, F25D 13/06, F25D 17/02, F28D 15/00, F28F 27/00

(54) **Wärmerückgewinnung aus einem Tunnelrückkühlerprozess**
Heat recovery from a tunnel heat exchange process
Récupération de chaleur à partir d'un processus d'aéroréfrigérant à tunnel

(30) Priorität: 29.10.2012 DE 102012219759
(43) Veröffentlichungstag der Anmeldung: 30.04.2014
(73) Patentinhaber: Krones AG, 93073 Neutraubling (DE)
(72) Erfinder: Wagner, Falko Jens, 93073 Neutraubling (DE); Münzer, Jan Karsten, 93073 Neutraubling (DE); Eckstein, Johannes, 93073 Neutraubling (DE)
(74) Vertreter: Grünecker Patent- und Rechtsanwälte PartG mbB

(56) Entgegenhaltungen:
- DE-A1-102007 003 976
- DE-T2- 69 414 611
- US-A1- 2002 170 440

## Beschreibung

Die vorliegende Erfindung betrifft ein Verfahren zur Wärmerückgewinnung aus einem Tunnelrückkühler. Die Erfindung umfasst ferner einen dem Verfahren entsprechenden Tunnelrückkühler.

### Hintergrund der Erfindung

Produkte wie etwa flüssige Lebensmittel, Getränke, Säfte oder Ähnliches werden häufig zwecks Haltbarmachung erwärmt und dann warm in Behälter abgefüllt. Die abgefüllten Produkte in den Behältern werden danach abgekühlt. Hierbei werden häufig Tunnelrückkühler eingesetzt. Es wird typischerweise flüssiges Kühlmittel verwendet, beispielsweise Wasser. Die aus dem Kühler auslaufenden, abgekühlten Behälter, etwa Flaschen, haben eine vorgegebene Temperatur, die niedriger ist als die Temperatur der einlaufenden Behälter. Nachdem im Tunnelkühler das Kühlmittel mit den Behältern in Kontakt getreten ist, beispielsweise durch Besprühen oder Berieseln, ist das Kühlmittel aufgrund des Wärmeaustauschs erwärmt. Zur Wärmerückgewinnung erfolgt die Einbindung eines Wärmeaustauschers in den Kühlmittelstrom. Das Kühlmittel wird in einem Kreislauf umgewälzt, wozu typischerweise eine oder mehrere Pumpen verwendet werden. Eine Auslegung der Pumpe und der Apparate und der Temperatur erfolgt starr auf die Nennausbringung der Anlage, also die maximale Leistungsgröße für die Anlage.

In der realen Umgebung eines Produktionsbetriebes ist der Fall des Erreichens der Nennausbringung jedoch nur in begrenzten Zeiträumen gegeben. Es werden beispielsweise verschiedene Produkte und verschiedene Leistungen gefahren. Ferner gibt es kurze Produktionslücken und längere Produktionsunterbrechungen. Bezüglich der Flaschenauslauftemperatur des Produktes hinter dem Tunnelrückkühler wird im realen Betrieb ein ausreichendes Kühlergebnis erzielt. Jedoch ist die Wärmeausbeute/Wärmerückgewinnung im Wärmeaustauscher des Kühlmittelstromes häufig nicht optimal.

In den Dokumenten DE69414611T2, DE102007003976A1 und US2002/0170440A1 sind ähnliche Tunnelrückkühler und Verfahren zur Wärmerückgewinnung aus einem Tunnelrückkühler offenbart, bei denen die Wärmerückgewinnung im Wärmeaustauscher des Kühlmittelstromes nicht gezielt beeinflusst und optimiert ist.

Angesichts der oben zitierten Probleme ist es somit Aufgabe der vorliegenden Erfindung, die Wärmeausbeute / Wärmerückgewinnung in einem Tunnelrückkühler zu optimieren und insbesondere zu erhöhen.

### Beschreibung der Erfindung

Die vorliegende Erfindung ist in den unabhängigen Ansprüchen 1 und 7 offenbart. Weitere Ausführungsbeispiele sind in den abhängigen Ansprüchen offenbart.

Das erfindungsgemäße Verfahren umfasst ein Verfahren zur Wärmerückgewinnung aus einem Tunnelkühler, der eine oder mehreren Kühlzellen zur Abkühlung von Produkten in Behältern mittels einer Kühlflüssigkeit umfasst, die in einem Kühlmittelkreislauf umläuft, der einen Wärmeaustauscher umfasst; mit den Schritten: Regeln der Umlaufmenge des Kühlmittels und Regeln der Temperatur des Kühlmittels; wobei sowohl die Umlaufmenge als auch die Temperatur des Kühlmittels gemessen werden und auf der Basis von Vergleichen mit vordefinierten Parametern geregelt werden, so dass die Wärmeausbeute des Wärmeaustauschers optimiert wird.

Durch die Regelung von sowohl der Umlaufmenge des Kühlmittels als auch der Temperatur des Kühlmittels kann auf die aktuelle Betriebssituation optimal eingegangen werden. Entsprechend von Vorgaben für beispielsweise Wärmemenge, Mindesttemperatur der auslaufenden Behälter, Höchsttemperatur der auslaufenden Behälter, Mindesttemperatur des Kühlmittels, Höchsttemperatur des Kühlmittels, Durchfluss an Kühlmittel, kann der Kühlmittelkreislauf abgestimmt werden. Die Gesamtwirkung der Wärmerückgewinnung kann damit vervielfältigt werden. Es versteht sich, dass die Begriffe Umlaufmenge und Umwälzmenge für das Kühlmittel als gleichwertig betrachtet werden. Ebenso werden die Begriffe Kühlmittelfluss und Kühlmittelstrom als gleichwertig betrachtet. Die Begriffe Wärmetauscher und Wärmeaustauscher werden ebenfalls als synonym betrachtet, genau so wie die Begriffe Tunnelrückkühler und Tunnelkühler als gleichwertig verwendet werden.

In dem Verfahren können die Schritte Regeln der Umlaufmenge des Kühlmittels und Regeln der Temperatur des Kühlmittels im Wesentlichen simultan erfolgen.

Das praktisch simultane, gleichzeitige Regeln der Umlaufmenge und der Temperatur des Kühlmittels kann somit besonders effizient an die aktuelle Betriebssituation angepasst werden, so dass das Ziel der Wärmerückgewinnung effizient erreichbar ist.

In dem Verfahren können die vordefinierten Parameter die Betriebsleistung des Tunnelkühlers umfassen.

Die Betriebsleistung des Tunnelkühlers kann als Parameter vorgegeben sein. Dieser Parameter kann als eine Schwelle verstanden werden.

In dem Verfahren können die Schritte Regeln der Umlaufmenge des Kühlmittels; und Regeln der Temperatur des Kühlmittels die aktuelle Betriebsleistung des Tunnelkühlers, insbesondere im Hinblick auf Betriebsunterbrechungen, berücksichtigen.

Das Regeln der Umlaufmenge des Kühlmittels und das Regeln der Temperatur des Kühlmittels können die aktuelle Betriebsleistung des Tunnelkühlers berücksichtigen. Insbesondere bei Betriebsunterbrechungen des Tunnelkühlers kann eine Veränderung der Temperatur und der Umlaufmenge angezeigt sein, etwa wenn beispielsweise vorübergehend keine zu kühlenden Behälter durch den Tunnelkühler laufen oder die Durchlaufgeschwindigkeit der Behälter verändert werden.

In dem Verfahren können die vordefinierten Parameter die Art des Produktes umfassen.

Abhängig von der Art des Produktes kann mit einer veränderten Temperatur gekühlt werden und/oder mit einer veränderten Kühlmittelmenge gekühlt werden. Eine entsprechende Regelung kann den Tunnelkühler auf das Produkt und seine Behälter optimal abstimmen.

Das oben beschriebene Verfahren kann ferner Nachregeln oder Neueingeben von einem oder mehreren der vordefinierten Parameter umfassen.

Die vordefinierten Parameter können als Ausgangs- oder Default-Werte verstanden werden. Es besteht die Möglichkeit, entsprechend der aktuellen Betriebssituation oder bei Produktwechsel oder bei unterschiedlichen Anforderungen an die Wärmerückgewinnung diese Parameter nachzuregeln oder neu einzugeben, um somit einen oder mehrere veränderte Parameter bereitstellen zu können.

Die Erfindung stellt ferner einen Tunnelrückkühler bereit mit einer oder mehreren Kühlzellen zur Abkühlung von Produkten in Behältern mittels einer Kühlflüssigkeit, umfassend: einen Kühlmittelkreislauf, in dem die Kühlflüssigkeit umläuft, der Kühlmittelkreislauf umfassend einen Wärmeaustauscher zur Rückgewinnung von Wärme aus der Kühlflüssigkeit, ein erstes Regelventil zur Regelung der Temperatur des Kühlmittels, ein zweites Regelventil zur Regelung der Umlaufmenge des Kühlmittels; Messmittel zum Messen der Temperatur und der Umlaufmenge des Kühlmittels; eine Kontrolleinheit zur Steuerung Kühlmittelkreislaufs, insbesondere zur Steuerung des ersten und des zweiten Regelventils, so dass die Wärmeausbeute des Wärmeaustauschers optimiert wird, wobei die Kontrolleinheit ausgebildet ist, sowohl die gemessene Umlaufmenge als auch die gemessene Temperatur des Kühlmittels mit vordefinierten Parametern zu vergleichen.

Die Vorteile sind die gleichen, die bereits beim entsprechenden Verfahren oben genannt wurden. Eine Kontrolleinheit, beispielsweise ein Computer, kann die Regelventile zum Regeln der Temperatur und zum Regeln der Umlaufmenge steuern.

In dem Tunnelrückkühler kann die Kontrolleinheit ausgebildet sein, das erste Regelventil und das zweite Regelventil im Wesentlichen simultan zu regeln.

In dem Tunnelrückkühler können die vordefinierten Parameter die Betriebsleistung des Tunnelkühlers umfassen.

In dem Tunnelrückkühler können die vordefinierten Parameter die Art des Produktes umfassen.

In dem Tunnelrückkühler kann die Kontrolleinheit ausgebildet sein, die aktuelle Betriebsleistung des Tunnelkühlers, insbesondere im Hinblick auf Betriebsunterbrechungen, zu berücksichtigen.

In dem Tunnelrückkühler kann die Kontrolleinheit ausgebildet sein, einen oder mehrere der vordefinierten Parameter nachzuregeln.

Die Temperatur des Kühlmittels sowie die Umlaufmenge des Kühlmittels können mittels Messmitteln, beispielsweise einem Temperature Indicator Controller, TIC (Temperatur-Anzeige-Kontrolleinheit), oder einer Mengen-Anzeige-Kontrolleinheit bestimmt werden. Diese können in die Regelventile integriert sein oder separat ausgebildet sein. Aus der einen oder den mehreren Kühlzellen des Tunnelkühlers kann der Flüssigkeitsstand in den Kühlzellen gemessen werden. Hierzu kann ein LIC/LLIC (Liquid Level Indicator Controller - Flüssigkeitsniveau-Anzeige-Kontrolleinheit) verwendet werden.

Es gilt also: anstelle einer einfachen Regelung, die nur auf die Temperatur des Kühlmittels oder auf der Umwälzmenge des Kühlmittels basiert, kann durch die praktisch simultane Regelung der Umwälzmenge des Kühlmittels und der Kühlmitteltemperatur auf die aktuelle Situation des Tunnelkühlers eingegangen werden. Für jedes Produkt, für jede Leistung und für jede Betriebssituation kann die Wärmeausbeute optimiert werden. Die Gesamtwirkung der Wärmerückgewinnung kann damit vervielfältigt werden. Ebenso ist es möglich, die Wärmeausbeute auf einen bestimmten Wunschwert einzustellen.

Im Folgenden werden Ausführungsformen der Erfindung unter Bezugnahme auf die Zeichnungen beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.

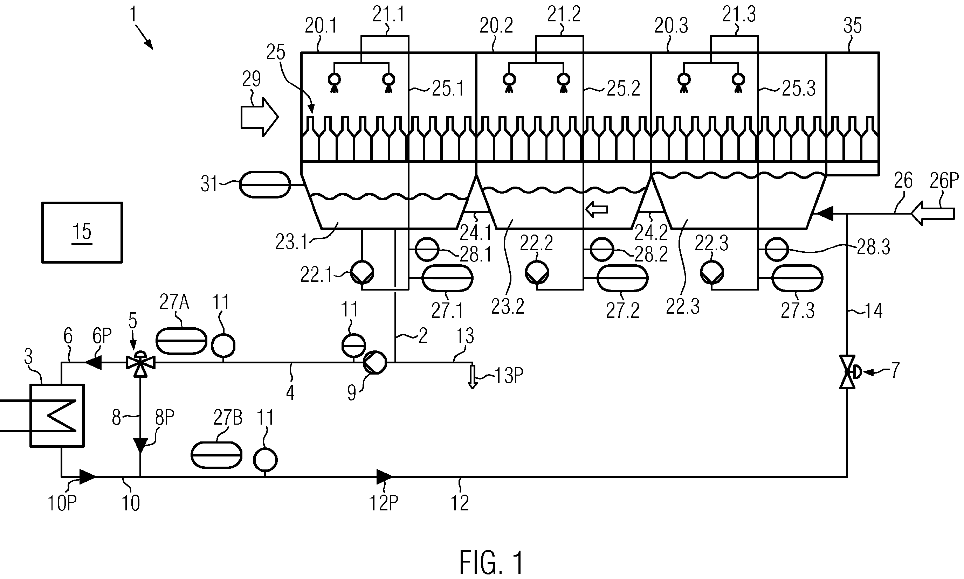

Figur 1 zeigt eine schematische Zeichnung eines erfindungsgemäßen Tunnelrückkühlers.

In der Figur 1 ist ein Tunnelrückkühler 1 mit mehreren Kühlzellen 20.1 bis 20.3 gezeigt. Rein beispielhaft sind in Figur 1 drei Kühlzellen 20.1 bis 20.3 gezeigt. Es ist aber ebenso möglich eine andere Anzahl von Kühlzellen vorzusehen. Eine Auslaufzone 35 ist ebenfalls in Figur 1 gezeigt. In den Tunnelrückkühler 1 werden Behälter 25 entsprechend dem Richtungspfeil 29 eingeführt. Dieser Pfeil bezeichnet die Laufrichtung des Produkts. Das Produkt ist in Behälter 25, beispielsweise Flaschen, abgefüllt. Die Flaschen sind typischerweise verschlossen. Die Behälter 25 werden durch die einzelnen Kühlzellen 20.1 bis 20.3 transportiert. Während des Transports werden die Behälter 25 durch das Besprühen oder Berieseln mit einer Kühlflüssigkeit, beispielsweise Wasser, abgekühlt. Umgekehrt wird die Kühlflüssigkeit bei Kontakt mit den Behältern 25 erwärmt. Die Kühlzellen 20.1 bis 20.3 umfassen dazu Besprühungs- oder Berieselungseinrichtungen 21.1 bis 21.3. Die unterschiedlichen Kühlzellen 20.1 bis 20.3 unterscheiden sich typischerweise durch die Temperaturen, die jeweils in einer der Kühlzellen herrschen. Typischerweise gibt es ein Temperaturgefälle von der ersten bis zur letzten der Kühlzellen 20.1 bis 20.3, wobei typischerweise die erste Kühlzelle, hier 20.1, die wärmste und die letzte Kühlzelle, hier 20.3, die kälteste Kühlzelle der Kühlzellen 20.1 bis 20.3 ist. Die Kühlzellen 20.1 bis 20.3 besitzen Sammelbecken für die Kühlflüssigkeit 23.1 bis 23.3. Die Sammelbecken 23.1 bis 23.3 sind mit Kühlflüssigkeit gefüllt. Der Flüssigkeitsspiegel der Kühlflüssigkeit kann in den einzelnen Sammelbecken 23.1 bis 23.3 unterschiedlich sein. Die Kühlzellen 20.1 bis 20.3 des Kühltunnels 1 sind beispielsweise miteinander mit Verbindungsleitungen 24.1 und 24.2 verbunden. Somit kann Kühlflüssigkeit von einer Kühlzelle in eine oder mehrere benachbarte Kühlzellen gepumpt werden, beispielsweise von einer kälteren Kühlzelle in eine wärmere Kühlzelle. Ein Pfeil 33 gibt die Pumprichtung an. Die Pumprichtung ist typischerweise entgegen der Laufrichtung 29 des Tunnelkühlers. Die dazu benötigten Pumpen sind in Figur 1 nicht gezeigt. Das Kühlwasser kann auch von einer Kühlzelle in eine benachbarte Kühlzelle gepumpt werden und dort gegebenenfalls auch erneut zur Berieselung eingesetzt werden

Figur 1 zeigt Pumpen 22.1 bis 22.3, die jeweils Kühlflüssigkeit aus dem entsprechenden Sammelbecken 23.1 bis 23.3 über Kühlmittelzuleitungen 25.1 bis 25.3 den Berieselungsanlagen 21.1 bis 21.3 zuleiten können. Die Pumpen 22.1 bis 22.3 können mit einem Motor ausgestattet sein. Zusätzlich sind Temperaturmessmittel 27.1 bis 27.3 gezeigt. Diese können beispielsweise Temperature Indicator Controller, TIC, umfassen. Mittels der Temperaturmessmittel 27.1 bis 27.3 kann für die aus dem jeweiligen Sammelbecken 23.1 bis 23.3 gepumpte Kühlflüssigkeit die aktuelle Temperatur gemessen werden. Ebenso kann diese Temperatur angezeigt werden. Somit kann für jede Kühlzelle 20.1 bis 20.3 die Temperatur des Kühlmittels genau bestimmt werden. Es versteht sich, dass die Temperaturmessmittel 27.1 bis 27.3 die Temperatur praktisch kontinuierlich messen können. Ferner sind in Figur 1 Drucksensoren mit den Bezugszeichen 28.1 bis 28.3 bezeichnet, die für jede Kühlzelle 20.1 bis 20.3 den Druck in den Kühlmittelzuleitungen messen können. Der Tunnelrückkühler zeigt ferner einen exemplarisch für die erste Kühlzelle 20.1 eine Flüssigkeitsniveau-Anzeige-Kontrolleinheit (Liquid Level Indicator Controller), LIC, 31, mit dem der Flüssigkeitsstand in der Kühlzelle 20.1 überprüft werden kann. Hieraus kann auch die Menge an Kühlflüssigkeit in der Kühlzelle abgeschätzt werden. Ebenso ist es möglich, für einige oder alle der übrigen Kühlzellen ebenfalls LIC Einheiten vorzusehen.

Mittels der Zuleitung 26 kann bei Bedarf zusätzlich frisches Kühlmittel in den Kühlmittelkreislauf gegeben werden. Das frische Kühlmittel kann entsprechend dem Pfeil 26P in das Sammelbecken der dritten Kühlzelle 20.3 eingeleitet werden. Es ist ebenso möglich, das frische Kühlmittel in eine andere der Kühlzellen 20.1 bis 20.3 einzuleiten oder aber mehr als eine Kühlzelle mit frischem Kühlmittel zu versorgen. Die Zuleitung 26 kann geeignete Absperrventile aufweisen, die nicht gezeigt sind.

Über die Leitungen 2, 4 und 6 kann das Kühlmittel von der ersten Kühlzelle 20.1, insbesondere aus deren Sammelbecken 23.1 zu einem Wärmetauscher / Wärmeaustauscher 3 gelangen. Es ist ebenso möglich, das Kühlmittel aus einer anderen der Kühlzellen oder mehreren der Kühlzellen abzuleiten. Das Kühlmittel wird von der Leitung 2 mittels einer Pumpe 9 zum Wärmeaustauscher 3 gepumpt. Vor der Pumpe 9 ist noch eine Leitung 13 dargestellt, über die Kühlmittel in Richtung des Pfeils 13P abgelassen werden kann. Die Leitung 13 ist typischerweise mit einem Absperrventil (nicht gezeigt) versehen, das im Normalzustand bei Betrieb des Tunnelkühlers 1 geschlossen ist. Zwischen der Pumpe 9 und dem Wärmeaustauscher 3 ist ein erstes Regelventil 5 eingezeichnet. Die Leitung zwischen dem Regelventil 5 und dem Wärmetauscher ist die Kühlmittelleitung mit dem Bezugszeichen 6 bezeichnet. Das Regelventil 5 ist in Figur 1 als Dreiwege-Regelventil dargestellt, es sind aber auch andere Ventiltypen möglich. Das Regelventil 5 regelt, wie viel Kühlmittel aus der Leitung 4 über die Leitung 6 zum Wärmetauscher 3 fließt. Kühlmittel, das den Wärmetaustauscher 3 erreicht, tauscht dort Wärme mit einem Medium des Wärmeaustauschers 3 aus (nicht gezeigt). Diese Wärme kann innerhalb einer Produktionsanlage, beispielsweise für einen Pasteurisierer (nicht gezeigt), der dem Tunnelrückkühler vorgeschaltet sein kann, eingesetzt werden. Nach dem Wärmeaustausch im Wärmeaustauscher ist das Kühlmittel kühler und fließt über eine Leitung 10 wieder vom Wärmetaustauscher zurück zum Tunnelkühler 1. Ebenso regelt das Regelventil 5, wie viel an Kühlmittel über die Leitung 8 an dem Wärmeaustauscher 3 vorbei fließt, ohne den Wärmeaustauscher zu erreichen. Die Flussrichtungen in den einzelnen Zuleitungen 6, 8, 10 sind mit Pfeilen 6P, 8P und 10P bezeichnet. Das Kühlmittel in den Leitungen 4, 6 und 8 hat praktisch die gleiche Temperatur. Das Kühlmittel in den Leitungen 4, 6 und 8 hat aber eine andere Temperatur als das Kühlmittel in der Leitung 10. Die Leitung 10 und die Leitung 8 treffen zusammen. Das Regelventil 5 regelt die Mischung der Kühlmittelströme, die über die Leitungen 8 und 10 wieder zusammen treffen. Entsprechend hat das Kühlmittel nach dem Zusammentreffen der Leitungen 8 und 10 eine niedrigere Temperatur als vor dem Wärmeaustauscher, sofern das Regelventil 5 Kühlmittel über die Leitung 6 zum Wärmeaustauscher 3 strömen lässt.

Es sind ferner Druckmessmittel 11 gezeigt, die sich vor und hinter dem Regelventil 5 befinden können. Diese können zusätzlich die Drücke in den Leitungen 4 und 8 messen. Es versteht sich, dass noch mehr Druckmessmittel, die hier nicht gezeigt sind, eingesetzt werden können. Ferner sind Temperaturmessmittel 27A und 27B gezeigt. Diese können die Temperatur des Kühlmittels vor dem Regelventil 5 und nach dem Zusammentreffen der Leitung 8 und 10 messen. Eine Steuer- und Kontrolleinheit 15 ist schematisch eingezeichnet. Diese kann die Informationen von den Temperaturmessmittel 27A und 27B aufnehmen und für Regelungsprozesse verwenden. Insbesondere kann das Regelventil 5 geregelt werden. Ebenso kann die Kontrolleinheit 15 die Informationen der Temperaturmessmittel 27.1 bis 27.3 aufnehmen, so dass Informationen über die Temperatur der Kühlflüssigkeit in jeder Kühlzelle für Regelungsprozesse berücksichtigt werden können. Die Kontrolleinheit kann ebenso die Informationen der LIC Einheiten 31 aufnehmen, um den Flüssigkeitsstand der Kühlflüssigkeit in den Kühlzellen zu berücksichtigen. Die Kontrolleinheit regelt ferner ein zweites Regelventil 7. Nach dem Zusammenführen der Leitung 8 und 10 wird über eine Leitung 12 in Richtung des Pfeils 12P das kühlere Kühlmittel wieder zu einer der Kühlzellen geleitet. In Figur 1 ist das beispielhaft die Kühlzelle 20.3. Das Regelventil 7 regelt den Durchsatz, also den Kühlmittelstrom, der zur Kühlzelle 20.3 zurück fließt. Zwischen dem Regelventil und der Kühlzelle kann über die Leitung 14 ein entsprechend geregeltes Kühlmittelvolumen zur Kühlzelle 20.3 fließen. Das Kühlmittel fließt dabei in das Sammelbecken der Kühlzelle 20.3. Das Temperaturmessmittel, TIC 27.3 kann entsprechend die Temperatur des zugeführten Kühlmittels kontrollieren. Die Kontrolleinheit 15 kann insbesondere beide Regelventile 5 und 7 praktisch simultan regeln. Dadurch kann sehr schnell auf Temperaturveränderungen oder Volumenanforderungen eingegangen werden.

Ein erfindungsgemäßes Verfahren für den in Figur 1 dargestellten Tunnelkühler umfasst das Regeln der Regelventile 5 und 7 in Abhängigkeit von aktuellen Betriebsparametern des Tunnelkühlers 1. Dabei können vorgegebene Parameter bezüglich der Temperatur des Kühlmediums, der Art des Produkts, des Druckes in den Kühlleitungen, oder bezüglich des Druckes in den Kühlzellen mit berücksichtigt werden. Diese Parameter können in einer Datenbank abgespeichert sein. Diese Parameter können jedoch aktualisiert oder nachgeführt werden, um an die aktuelle Betriebssituation des Tunnelkühlers angepasst werden zu können.

Im ungeregelten Fall wird die Kühlmedientemperatur bestimmt durch Umweltfaktoren, z.B. die Temperatur eines Kühlturms und der Volumenstrom nicht geregelt. Der in Kombination zu große und zu kalte Kühlmedienstrom erlaubt kaum Rückgewinnung, weil kein "Aufkonzentrieren" von Wärme in der Maschine möglich ist.

Es kann die Kühlung für den Tunnelrückkühler 1 optimiert werden, indem, durch die Kontrolleinheit 15, der Volumenstrom mittels Regelventil 7 und die Kühlmedientemperaturen mittels Regelventil 5 derart eingestellt werden, dass die Auslauftemperatur der Produkte aus dem Tunnelkühler möglichst exakt eingestellt wird.

Es kann ferner die Wärmerückgewinnung optimiert werden, in dem beispielsweise der Kühlmittelstrom mittels des Regelventils 7 soweit abgesenkt wird, wie bei den aktuellen Kühlmedientemperaturen und gleichbleibender Auslauftemperatur möglich ist. Damit wird die Rücklauftemperatur des Kühlmittels erhöht und die Energierückgewinnung folglich effizienter. Es kann ferner eine maximale Wärmerückgewinnung angestrebt werden, indem erneut der Kühlmittelstrom der Kühlzellenkaskade mittels des Regelventils 7 soweit abgesenkt wird, wie bei den Kühlmedientemperaturen und innerhalb festgelegter Veränderungen der Auslauftemperatur möglich ist. Damit wird die Rücklauftemperatur der Kaskade erhöht und die Energierückgewinnung effizienter, die Auslauftemperatur verändert sich jedoch und wird wärmer oder kälter als der eigentliche Auslegungspunkt.

## Patentansprüche

1. Verfahren zur Wärmerückgewinnung aus einem Tunnelrückkühler (1), der eine oder mehreren Kühlzellen (20.1 - 20.3) zur Abkühlung von Produkten in Behältern (25) mittels einer Kühlflüssigkeit umfasst, die in einem Kühlmittelkreislauf umläuft, der einen Wärmeaustauscher (3) umfasst; mit den Schritten:
(i) Regeln, mittels einer Kontrolleinheit (15), der Umlaufmenge des Kühlmittels; und
(ii) Regeln, mittels der Kontrolleinheit (15), der Temperatur des Kühlmittels;
wobei sowohl die Umlaufmenge als auch die Temperatur des Kühlmittels gemessen werden und auf der Basis von Vergleichen mit jeweils vordefinierten Parametern durch die Kontrolleinheit (15) geregelt werden, so dass die Wärmeausbeute des Wärmeaustauschers (3) optimiert wird;
wobei Kühlmittel, das den Wärmetaustauscher (3) erreicht, dort Wärme austauscht mit einem Medium des Wärmeaustauschers (3).

2. Verfahren gemäß Anspruch 1, wobei die Schritte (i) und (ii) im Wesentlichen simultan erfolgen.

3. Verfahren gemäß wenigstens einem der Ansprüche 1 oder 2, wobei die vordefinierten Parameter die Betriebsleistung des Tunnelrückkühlers (1) umfassen.

4. Verfahren gemäß wenigstens einem der Ansprüche 1 bis 3, wobei die Schritte (i) und (ii) die aktuelle Betriebsleistung des Tunnelrückkühlers (1), insbesondere im Hinblick auf Betriebsunterbrechungen, berücksichtigen.

5. Verfahren gemäß wenigstens einem der Ansprüche 1 bis 4, wobei die vordefinierten Parameter die Art des Produktes umfassen.

6. Verfahren gemäß wenigstens einem der Ansprüche 1 bis 5, ferner umfassend Nachregeln oder Neueingeben von einem oder mehreren der vordefinierten Parameter.

7. Tunnelrückkühler (1) mit einer oder mehreren Kühlzellen (20.1 - 20.3) zur Abkühlung von Produkten in Behältern (25) mittels einer Kühlflüssigkeit, umfassend:
einen Kühlmittelkreislauf, in dem die Kühlflüssigkeit umläuft, umfassend
einen Wärmeaustauscher (3) zur Rückgewinnung von Wärme aus der Kühlflüssigkeit,
ein erstes Regelventil (5) zur Regelung der Temperatur des Kühlmittels,
ein zweites Regelventil (7) zur Regelung der Umlaufmenge des Kühlmittels;
Messmittel (27.1 - 27.3, 27A, 27B, 31) zum Messen der Temperatur und der Umlaufmenge des Kühlmittels;
eine Kontrolleinheit (15) zur Steuerung des Kühlmittelkreislaufs, insbesondere zur Steuerung des ersten und des zweiten Regelventils (5, 7), so dass die Wärmeausbeute des Wärmeaustauschers (3) optimiert wird, wobei die Kontrolleinheit (15) ausgebildet ist, sowohl die gemessene Umlaufmenge als auch die gemessene Temperatur des Kühlmittels jeweils mit vordefinierten Parametern zu vergleichen;
wobei Kühlmittel, das den Wärmetaustauscher (3) erreicht, dort Wärme austauscht mit einem Medium des Wärmeaustauschers (3).

8. Tunnelrückkühler (1) gemäß Anspruch 7, wobei die Kontrolleinheit (15) ausgebildet ist, das erste Regelventil (5) und das zweite Regelventil (7) im Wesentlichen simultan zu regeln.

9. Tunnelrückkühler (1) gemäß einem der Ansprüche 7 oder 8, wobei die vordefinierten Parameter die Betriebsleistung des Tunnelrückkühlers (1) umfassen.

10. Tunnelrückkühler (1) gemäß einem der Ansprüche 7 bis 9, wobei die vordefinierten Parameter die Art des Produktes umfassen.

11. Tunnelrückkühler (1) gemäß einem der Ansprüche 7 bis 10, wobei die Kontrolleinheit (15) ausgebildet ist, die aktuelle Betriebsleistung des Tunnelrückkühlers (1), insbesondere im Hinblick auf Betriebsunterbrechungen, zu berücksichtigen.

12. Tunnelrückkühler (1) gemäß einem der Ansprüche 7 bis 11, wobei die Kontrolleinheit (15) ausgebildet ist, einen oder mehrere der vordefinierten Parameter nachzuregeln.

13. Tunnelrückkühler (1) gemäß einem der Ansprüche 7 bis 12, wobei die Messmittel (27.1 - 27.3, 27A, 27B) eine Temperatur-Anzeige-Kontrolleinheit, TIC, umfassen.

14. Tunnelrückkühler (1) gemäß einem der Ansprüche 7 bis 13, wobei die Messmittel (31) eine Flüssigkeitsniveau-Anzeige-Kontrolleinheit, LIC, umfassen.

## Claims

1. Method for the heat recovery from a tunnel recooling apparatus (1), comprising one or several cooling cells (20.1 - 20.3) for cooling products in containers (25) by means of a cooling agent circulating in a coolant circuit, comprising a heat exchanger (3); including the steps of:
(i) controlling, using a control unit (15), the circulating quantity of the coolant; and
(ii) controlling using the control unit (15), the temperature of the coolant; wherein both the circulating quantity and the temperature of the coolant are measured and controlled on the basis of comparisons with predefined parameters, so that the thermal yield of the heat exchanger (3) is optimized;
wherein coolant which reaches the heat exchanger (3) there exchanges heat with a medium of the heat exchanger (3).

2. Method according to claim 1, wherein steps (i) and (ii) are essentially effected simultaneously.

3. Method according to at least one of claims 1 or 2, wherein the predefined parameters include the operating performance of the tunnel recooling apparatus (1).

4. Method according to at least one of claims 1 to 3, wherein steps (i) and (ii) respond to the current operating performance of the tunnel recooling apparatus (1), in particular with respect to interruptions of operation.

5. Method according to at least one of claims 1 to 4, wherein the predefined parameters comprise the type of product.

6. Method according to at least one of claims 1 to 5, furthermore comprising the readjustment or re-entry of one or several ones of the predefined parameters.

7. Tunnel recooling apparatus (1) with one or several cooling cells (20.1 - 20.3) for cooling products in containers (25) by means of a cooling agent, comprising:
a coolant circuit in which the cooling agent is circulating, comprising
a heat exchanger (3) for recovering heat from the cooling agent,
a first control valve (5) for controlling the temperature of the coolant,
a second control valve (7) for controlling the circulating quantity of the coolant;
a measuring equipment (27.1 - 27.3, 27A, 27B, 31) for measuring the temperature and the circulating quantity of the coolant;
a control unit (15) for controlling the coolant circuit, in particular for controlling the first and the second control valves (5, 7), so that the thermal yield of the heat exchanger (3) is optimized, wherein the control unit (15) is designed to compare both the measured circulating quantity and the measured temperature of the coolant with predefined parameters.

8. Tunnel recooling apparatus (1) according to claim 7, wherein the control unit (15) is embodied to control the first control valve (5) and the second control valve (7) essentially simultaneously.

9. Tunnel recooling apparatus (1) according to one of claims 7 to 8, wherein the predefined parameters include the operating performance of the tunnel recooling apparatus (1).

10. Tunnel recooling apparatus (1) according to one of claims 7 to 9, wherein the predefined parameters include the type of product.

11. Tunnel recooling apparatus (1) according to one of claims 7 to 10, wherein the control unit (15) is embodied to respond to the current operating performance of the tunnel recooling apparatus (1), in particular with respect to interruptions of operation.

12. Tunnel recooling apparatus (1) according to one of claims 7 to 11, wherein the control unit (15) is embodied to readjust one or several ones of the predefined parameters.

13. Tunnel recooling apparatus (1) according to one of claims 7 to 12, wherein the measuring equipment (27.1 - 27.3, 27A, 37B) comprises a temperature indicator control unit, TIC.

14. Tunnel recooling apparatus (1) according to one of claims 7 to 13, wherein the measuring equipment (31) comprises a liquid level indicator control unit, LIC.

## Revendications

1. Procédé de récupération de chaleur d'un processus d'aéroréfrigérant à tunnel (1) comprenant une ou plusieurs cellules de refroidissement (20.1 - 20.3) pour refroidir des produits dans des récipients (25) au moyen d'un liquide de refroidissement circulant dans un circuit de refroidissement comprenant un échangeur de chaleur (3) ; comprenant les étapes
i) régulation, au moyen d'une unité de contrôle (15), de la quantité de circulation du liquide de refroidissement; et
(ii) contrôle, au moyen de l'unité de contrôle (15), de la température du liquide de refroidissement;
dans lequel la quantité de circulation et la température du liquide de refroidissement sont toutes deux mesurées et contrôlées par l'unité de commande (15) sur la base de comparaisons avec des paramètres prédéfinis respectifs, de sorte que le rendement calorifique de l'échangeur de chaleur (3) est optimisé;
dans lequel le fluide de refroidissement qui atteint l'échangeur de chaleur (3) y échange de la chaleur avec un fluide de l'échangeur de chaleur (3).

2. Procédé selon la revendication 1, dans lequel les étapes (i) et (ii) se déroulent sensiblement simultanément.

3. Procédé selon au moins l'une des revendications 1 ou 2, dans lequel les paramètres prédéfinis comprennent la performance d'exploitation du processus d'aéroréfrigérant à tunnel (1).

4. Procédé selon au moins l'une des revendications 1 à 3, dans lequel les étapes (i) et (ii) tiennent compte des performances réelles de fonctionnement du processus d'aéroréfrigérant à tunnel (1), en particulier en ce qui concerne les interruptions de service.

5. Procédé selon au moins une des revendications 1 à 4, dans lequel les paramètres prédéfinis comprennent le type de produit.

6. Procédé selon au moins une des revendications 1 à 5, comprenant en outre le réajustement ou la réintroduction d'un ou de plusieurs des paramètres prédéfinis.

7. Processus d'aéroréfrigérant à tunnel (1) avec une ou plusieurs cellules froides (20.1 - 20.3) pour le refroidissement de produits dans des conteneurs (25) au moyen d'un liquide de refroidissement, comprenant:
un circuit de refroidissement dans lequel circule le liquide de refroidissement, comprenant
un échangeur de chaleur (3) pour récupérer la chaleur du liquide de refroidissement,
une première vanne de régulation (5) pour contrôler la température du liquide de refroidissement,
une seconde vanne de régulation (7) pour contrôler la circulation du liquide de refroidissement;
des moyens de mesure (27.1 - 27.3, 27A, 27B, 31) pour mesurer la température et la quantité de circulation du liquide de refroidissement;
une unité de commande (15) pour la régulation du circuit de liquide de refroidissement, en particulier pour la commande de la première et de la seconde vanne de régulation (5, 7) de manière à optimiser le rendement calorifique de l'échangeur de chaleur (3), l'unité de commande (15) étant conçue pour comparer à la fois la quantité de circulation mesurée et la température mesurée du liquide de refroidissement à des paramètres prédéfinis;
dans lequel le fluide de refroidissement qui atteint l'échangeur de chaleur (3) y échange de la chaleur avec un fluide de l'échangeur de chaleur (3).

8. Processus d'aéroréfrigérant de tunnel (1) selon la revendication 7, dans lequel l'unité de commande (15) est conçue pour commander la première vanne de commande (5) et la seconde vanne de commande (7) sensiblement simultanément.

9. Processus d'aéroréfrigérant de tunnel (1) selon les revendications 7 ou 8, dans lequel les paramètres prédéfinis comprennent la capacité de fonctionnement du processus d'aéroréfrigérant de tunnel (1).

10. Processus d'aéroréfrigérant à tunnel (1) selon l'une quelconque des revendications 7 à 9, dans lequel les paramètres prédéfinis comprennent le type de produit.

11. Processus d'aéroréfrigérant à tunnel (1) selon l'une des revendications 7 à 10, dans lequel l'unité de commande (15) est conçue pour prendre en compte la performance de fonctionnement réelle du processus d'aéroréfrigérant à tunnel (1), en particulier en ce qui concerne les interruptions de service.

12. Processus d'aéroréfrigérant à tunnel (1) selon l'une des revendications 7 à 11, dans lequel l'unité de commande (15) est conçue pour réajuster un ou plusieurs des paramètres prédéfinis.

13. Processus d'aéroréfrigérant à tunnel (1) selon l'une des revendications 7 à 12, dans lequel les moyens de mesure (27.1, 27.3, 27A, 27B) comprennent une unité de contrôle d'indication de température, TIC.

14. Processus d'aéroréfrigérant à tunnel (1) selon l'une quelconque des revendications 7 à 13, ledit moyen de mesure (31) comprenant une unité de commande d'indicateur de niveau de liquide, LIC.
